# EUROPÄISCHE PATENTSCHRIFT

(11) **EP 3 661 690 B1**
(45) Veröffentlichungstag und Bekanntmachung des Hinweises auf die Patenterteilung: **27.05.2026**
(21) Anmeldenummer: 18750125.9
(22) Anmeldetag: 27.07.2018
(51) Int. Cl.: B23K 26/046, B23K 26/03, B23K 26/70, B23K 26/04

(54) **VERFAHREN ZUR LASERMATERIALBEARBEITUNG UND LASERMASCHINE**
METHOD FOR LASER MACHINING AND LASER MACHINE
PROCÉDÉ POUR L'USINAGE LASER DE MATÉRIAU ET MACHINE LASER

(30) Priorität: 03.08.2017 DE 102017213511
(43) Veröffentlichungstag der Anmeldung: 10.06.2020
(73) Patentinhaber: TRUMPF Werkzeugmaschinen SE + Co. KG, 71254 Ditzingen (DE)
(72) Erfinder: REGAARD, Boris, 70499 Stuttgart (DE)
(74) Vertreter: Trumpf Patentabteilung
(86) Internationale Anmeldenummer: PCT/EP2018/070495
(87) Internationale Veröffentlichungsnummer: WO 2019/025328

(56) Entgegenhaltungen:
- EP-A1- 1 728 581
- EP-A1- 2 687 317
- EP-A1- 2 894 004
- DE-A1- 102007 013 623
- DE-A1- 102011 007 176
- US-A1- 2003 002 055

## Beschreibung

Die Erfindung betrifft ein Verfahren zur Lasermaterialbearbeitung und eine Lasermaschine, siehe Ansprüche 1 und 8.

Heutige Laserbearbeitungsköpfe an Maschinen zur Lasermaterialbearbeitung, insbesondere Laserschneidköpfe, sind konstruktiv hoch präzise ausgeführt, um laterale Lagefehler des Laserfokuspunkts auf dem zu bearbeitenden Werkstück hinreichend klein zu halten. Typische Lagetoleranzen des Laserfokuspunkts in der Laserdüse betragen 50 µm. Dies führt zu einem zulässigen Lagefehler der Strahlformungslinsen im Laserbearbeitungskopf von unter 5 µm. Die hohe Präzision bedingt entsprechend hohe Kosten in der Fertigung der Laserbearbeitungsköpfe, insbesondere bei Laserbearbeitungsköpfen mit Zoomfunktion, also mit einer Verstellmöglichkeit der im Kopf angeordneten Linse(n) in Strahlausbreitungsrichtung. Bei solchen Zoomoptiken ist beispielsweise eine rotationssymmetrische, dehnungsarme Konstruktion notwendig. Außerdem muss die Konstruktion so ausgeführt sein, dass die auftretenden mechanischen Fehler kompensiert werden können. Die Position der optischen Elemente im Laserbearbeitungskopf und/oder die Position des Faserendes einer zum Bearbeitungskopf führenden Lichtleitfaser müssen also einen Freiheitsgrad aufweisen, der eine Verschiebung und/oder Verkippung der optischen Elemente oder des Faserendes senkrecht zur Strahlrichtung erlaubt, so dass eine exakte (manuelle) laterale Justierung des Laserfokuspunkts in der Fokusebene relativ zu festgelegten Bezugspunkten (z.B. einer Schneiddüse) bei der Inbetriebnahme des Laserbearbeitungskopfs erfolgen kann.

Im Betrieb erwärmen sich die optischen Elemente (Linsen, Spiegel, mechanische Aufnahmen) im Bearbeitungskopf durch die großen eingebrachten Laserleistungen und können sich durch abwechselnde Erwärmung und Kühlung thermisch verformen. Diese Verformungen passieren langsam (Zeitdauer größer als eine Sekunde) und führen ebenfalls zu einem lateralen Lagefehler des Laserfokuspunkts auf dem Werkstück. Bei einer langen Strahlführung des Laserstrahls in der Maschine, wie sie bei CO₂-Laserschneidmaschinen üblich ist, kann auch eine Änderung der Temperatur in der Maschinenhalle oder Sonneneinstrahlung auf die Maschine zu Strahllageänderungen führen. Weiterhin können (reproduzierbare) Verkippungen oder Verschiebungen von Komponenten des Bewegungssystems dazu führen, dass an unterschiedlichen Bearbeitungspositionen in der Maschine laterale Lagefehler des Laserfokuspunkts auftreten. In vergleichbarer Weise können bei einer Optik mit verstellbarer Z-Lage der Linsen zur Fokuslagen- und/oder Strahldurchmesseranpassung fertigungsbedingte Toleranzen dazu führen, dass die laterale Lage der Linsen an unterschiedlichen Z-Positionen variiert. Dies führt ebenfalls zu einem reproduzierbaren lateralen Lagefehler des Laserfokuspunkts auf dem Werkstück.

Die laterale Lage der Laserdüse relativ zur Fokussierlinse senkrecht zur Strahlausbreitungsrichtung weist aufgrund von Fertigungstoleranzen der Düse ebenfalls eine Toleranz auf. Abweichungen in der Düsengeometrie führen zu einer Abweichung der Düsenmittigkeit des Laserfokuspunkts trotz gleichbleibender Lage des Laserstrahls.

Die in den vorstehenden Absätzen beschriebenen Szenarien unterscheiden sich insofern, als konstruktiv oder fertigungsbedingte mechanische Lagefehler der optischen Elemente im Bearbeitungskopf zu einem reproduzierbaren Strahllagefehler bei jeweils gleicher Linsen- bzw. Spiegelpositionen führen, während durch thermische Effekte oder einen Wechsel der Schneiddüse bedingte Strahllagefehler nicht reproduzierbar sind.

Zur Kompensation von Strahllagefehlern ist es beispielsweise aus DE 10 2007 013 623 A1 oder EP 2 894 004 A1 (offenbarend den Oberbegriff der Ansprüche 1 und 8) bekannt, den Laserstrahl durch eine Neigungsänderung eines im Bearbeitungskopf angeordneten Spiegels oder durch eine Verschiebung der Fokussierlinse senkrecht zur Strahlausbreitungsrichtung in der Schneiddüse zu zentrieren.

Aus der DE 10 2011 003 717 A1 ist es bekannt, mittels einer Bilderfassungseinheit die kreisförmige Düseninnenkontur zu erfassen und als deren Kreismittelpunkt die Düsenmitte zu erfassen. Mit Hilfe einer Regelungseinrichtung wird die Position des Laserstrahls relativ zur Düse korrigiert, so dass der Werkzeugmittelpunkt mit der Düsenmitte übereinstimmt.

Aufgabe der vorliegenden Erfindung ist es, die Strahllagenkorrektur in Laserbearbeitungsköpfen weiter zu verbessern.

Erfindungsgemäß wird diese Aufgabe durch ein Verfahren zur Lasermaterialbearbeitung entsprechend Anspruch 1 gelöst, bei dem vor dem eigentlichen Laserbearbeitungsprozess der Einfluss einer Positionsänderung zumindest eines optischen Elements in einer Strahlführung, z.B. in einem Laserbearbeitungskopf, und/oder eines Laserbearbeitungskopfs in einem Arbeitsraum einer Lasermaschine und/oder eines bewegbaren Teils des Laserbearbeitungskopfs, auf die Lage des Fokuspunkts des Laserstrahls in der Fokusebene oder relativ zu einem Bezugspunkt am Laserbearbeitungskopf, insbesondere einem Düsenmittelpunkt, erfasst wird und anschließend, vor und/oder während der Lasermaterialbearbeitung, der Fokuspunkt anhand der zuvor erfassten Positionsänderung auf eine vorgegebene Lage in der Fokusebene oder relativ zu dem Bezugspunkt durch eine Positionseinstellung zumindest eines optischen Elements in der Strahlführung des Laserstrahls, insbesondere im Laserbearbeitungskopf, eingestellt wird. Das zumindest eine optische Element, das vor und/oder während der Lasermaterialbearbeitung gesteuert eingestellt wird, kann dabei eines der Elemente sein, dessen Positionsänderung eine laterale Lageänderung des Fokuspunkts bewirkt. Es wird dann vor und/oder während der Lasermaterialbearbeitung in einer anderen Raumrichtung bewegt bzw. verkippt als während der Erfassung der Positionsänderung des Fokuspunkts, die zur Lageänderung des Fokuspunkts geführt hat. Vorzugsweise wird allerdings ein weiteres optisches Element in der Strahlführung des Laserstrahls zur Kompensation der Lageänderung des Fokuspunkts eingestellt. Dabei kann bekannt sein, welche Positionsänderung des Fokuspunkts durch eine Verstellung dieses optischen Elements bewirkt wird. Alternativ oder zusätzlich kann vorgesehen sein, dass die Auswirkung einer Verstellung dieses optischen Elements bei der Inbetriebnahme der Lasermaschine oder vor Beginn des Laserbearbeitungsprozesses gemessen wird.

Dabei ist es denkbar, dass der Einfluss einer Positionsänderung mehrerer optischer Elemente auf die Lage des Fokuspunkts in der Fokusebene erfasst wird, jedoch nur eine Teilmenge der optischen Elemente eingestellt wird, um dadurch die vorgegebene laterale Lage des Fokuspunkts in der Fokusebene einzustellen. Zu erwähnen ist, dass der Laserbearbeitungskopf und die darin angeordneten optischen Elemente Teil der Strahlführung sind.

Durch das erfindungsgemäße Verfahren ist es möglich, die Strahlführung einer Lasermaschine und/oder den Laserbearbeitungskopf konstruktiv ohne die Anforderung einer großen Absolutgenauigkeit und nur noch mit einer hinreichenden Wiederholgenauigkeit bei der Positionierung der optischen Elemente bzw. des Laserbearbeitungskopfs auszuführen. Werden z.B. die Linsen einer Zoomoptik auf nicht exakt parallelen Achsen bewegt, so ergibt sich für jede eingestellte Linsenposition eine reproduzierbare laterale Lage des Laserfokus in der Fokusebene. Diese gemessene Lage wird gemeinsam mit der eingestellten Linsenposition gespeichert, z.B. in der Steuerung der Lasermaschine. Auf diese Weise können in der Steuerung der Lasermaschine Korrekturwerte für eine gewünschte, beispielsweise zentrisch zur Laserdüse ausgerichteten Positionierung des Fokuspunkts ermittelt und gespeichert werden. Nicht gemessene Zwischenwerte können in geeigneter Weise interpoliert werden. Eine Lageänderung des Fokuspunkts ergibt sich bei einer Freistrahlführung des Laserstrahls in der Lasermaschine auch für unterschiedliche Arbeitsraumpositionen des Laserbearbeitungskopfs und können analog ermittelt und gespeichert werden. Ungenauigkeiten bei der Fertigung der Maschine bzw. des Laserbearbeitungskopfs können mit Hilfe des erfindungsgemäßen Verfahrens kompensiert werden, indem die ermittelten Korrekturwerte für die laterale Fokusposition in der Fokusebene während des Bearbeitungsprozesses genutzt werden, um gesteuert die gewünschte laterale Fokusposition bei jeder eingestellten Position von Bearbeitungskopf und/oder optischen Elementen in der Strahlführung einzustellen. Die Kompensation der Lagefehler erfolgt dabei durch Verschieben und/oder Verkippen mindestens eines optischen Elements in der Strahlführung der Maschine, insbesondere im Laserbearbeitungskopf. Auf diese Weise kann (muss aber nicht) auf Freiheitsgrade zur manuellen Justierung der Linsen- und Faserpositionen senkrecht zur Strahlausbreitungsrichtung verzichtet werden. Mechanische Toleranzen im Laserbearbeitungskopf und/oder in der Strahlführung können mit dem erfindungsgemäßen Verfahren schnell und bereits zu Beginn bzw. vor dem Bearbeitungsprozess kompensiert werden, also bereits ehe ein online-Messsystem regelnd in den Laserbearbeitungsprozess eingreifen kann. Dies ist insofern bedeutend, als eine anfängliche Fehlstellungen der lateralen Lage des Laserfokuspunkts zu Schäden am Werkzeug und/oder am Werkstück führen kann.

Zumindest ein zu einer Lageänderung des Fokuspunkts führender Parameter, beispielsweise die Position einer Linse des Bearbeitungskopfs in Strahlausbreitungsrichtung, wird entsprechend der Erfindung erfasst und eine Zuordnung des zumindest einen Parameters zu einer Lage des Fokuspunkts in der Fokusebene oder relativ zum Bezugspunkt wird gespeichert.

Insbesondere können mehrere Parameter, beispielsweise die Z-Lage mehrerer strahlformender Linsen oder die X,Y,Z-Lage des Bearbeitungskopfs im Bearbeitungsraum, erfasst und eine Zuordnung für mehrere Parameter gespeichert werden. Die Zuordnung kann beispielsweise in Form einer Tabelle oder einer Korrekturfunktion gespeichert werden.

Das zumindest eine optische Element in der Strahlführung, das zur lateralen Lagekorrektur des Laserfokus dient, kann aktorisch verstellt werden. Es kann also erfindungsgemäß eine ansteuerbare motorische Korrekturachse vorgesehen sein. Beispielsweise kann durch eine motorisch lateral (senkrecht zur Strahlausbreitungsrichtung) verstellbare Linse oder einen motorisch verkippbaren Spiegel im Laserbearbeitungskopf anhand der gespeicherten Korrekturwerte oder der Korrekturfunktion der Lagefehler des Laserstrahls kompensiert werden bzw. eine vorgegebene Lage des Fokuspunkts eingestellt werden.

Die Bestimmung der Korrelation zwischen der Position des Laserbearbeitungskopfs oder der optischen Elemente im Laserbearbeitungskopf und der lateralen Lage des Laserfokus in der Fokusebene oder zu dem Bezugspunkt sowie der Korrekturwerte kann bei der Inbetriebnahme der Lasermaschine in einer Grundjustage oder nach einer festgelegten Betriebsdauer eines Laserbearbeitungskopfs mit Hilfe einer geeigneten Messvorrichtung erfolgen, beispielsweise mit Hilfe eines Strahls reduzierter Leistung und einer in einer Bearbeitungsebene (Fokusebene) angeordneten Kamera oder mit Hilfe eines Fokussensors, wie er z.B. in der DE 10 2011 007 176 A1 beschrieben ist.

Weiterhin kann vorgesehen sein, dass der Fokuspunkt mittig oder gezielt außermittig in einer Laserdüse des Laserbearbeitungskopfs positioniert wird. Insbesondere kann die vorgegebene Lage dem Mittelpunkt einer Laserdüse des Laserbearbeitungskopfs entsprechen oder einen gezielten Versatz zum Mittelpunkt der Laserdüse aufweisen.

Während eines Laserbearbeitungsprozesses kann ergänzend die laterale Position des Laserfokuspunkts, insbesondere bezüglich der Laserdüse, erfasst werden und der Laserfokuspunkt kann auf die vorgegebene Lage, insbesondere auf eine mittige Position in der Laserdüse, geregelt werden. Bei Durchführung dieses Verfahrensschrittes ist es vorteilhaft, wenn dasselbe oder dieselben optische(n) Element(e) in der Strahlführung, insbesondere im Laserbearbeitungskopf, aktorisch verstellt werden, die auch zur gesteuerten Lagekorrektur dienen. Dadurch wird die Regelung vereinfacht. Erfindungsgemäß kann somit eine gesteuerte Strahllageeinstellung bzw. Strahllagekorrektur anhand von zuvor gespeicherten Korrekturwerten mit einem Regelungsverfahren kombiniert werden. Zusätzlich zu der gesteuerten Kompensation werden laterale Lagefehler des Laserfokuspunkts, die sich beispielsweise durch thermische Effekte ergeben, durch (gegebenenfalls jeweils) ein geeignetes Messsystem, beispielsweise durch einen am Laserbearbeitungskopf angeordneten Fokuslagesensor oder eine am Bearbeitungskopf angeordnete Kamera, während des Laserbearbeitungsprozesses gemessen. Geeignete Messsysteme sind beispielsweise in DE 10 2011 007 176 A1 oder DE 10 2011 003 717 A1 beschrieben. Der so erhaltene Messwert kann in einem Regelkreis genutzt werden, um mittels der Korrekturachse die Lage des Fokuspunkts zu korrigieren. Es kann also der gesteuerten Verstellung eine geregelte Verstellung, insbesondere derselben optischen Elemente, überlagert werden.

Nach einem Wechsel der Laserdüse kann mittels der vorstehend genannten Messsysteme, insbesondere mittels einer am Laserbearbeitungskopf angeordneten Kamera, der Mittelpunkt der Laserdüse bestimmt und als neuer Zielwert, d.h. als vorgegebene Lage, für die die gesteuerte laterale Positionierung sowie ggf. für die Regelung der lateralen Lage des Laserfokuspunkts festgelegt werden. Im Anschluss daran kann während des Bearbeitungsprozesses eine Steuerung und ggf. eine Regelung der Lage des Laserfokuspunkts auf den Düsenmittelpunkt erfolgen. Insbesondere kann vor und/oder während dem Laserbearbeitungsprozess die Lage und/oder Form der Laserdüse erfasst und der Mittelpunkt der Laserdüse als vorgegebene Lage festgelegt werden.

Erfindungsgemäß kann eine Kaskadenregelung realisiert sein, bei der durch thermische Effekte bedingte laterale Lageänderungen des Laserfokuspunkts über ein Messsystem in einem inneren Regelkreis mit Hilfe eines Fokussensors erfasst und korrigiert werden und die Führungsgröße für diesen Regelkreis durch einen äußeren Regler vorgegeben wird, der nach einem Düsentausch die Lage der Laserdüse ermittelt und als Sollwert für den inneren Regelkreis vorgibt.

In den Rahmen der Erfindung fällt außerdem eine Lasermaschine entsprechend Anspruch 8, mit einem Laserbearbeitungskopf und einer Laserdüse sowie einer ersten Messeinrichtung zur Erfassung der Lage eines Fokuspunkts in der Fokusebene oder relativ zu einem Bezugspunkt am Laserbearbeitungskopf sowie einem Speicher zur Speicherung der Zuordnung der Position zumindest eines verstellbaren optischen Elements in der Strahlführung des Laserstrahls, insbesondere im Laserbearbeitungskopf, und/oder der Position des Laserbearbeitungskopfs im Arbeitsraum der Lasermaschine und/oder der Position eines verstellbaren Teils des Laserbearbeitungskopfs zu einer Lage des Fokuspunkts in der Fokusebene oder relativ zu einem Bezugspunkt am Laserbearbeitungskopf sowie ein durch eine Steuerung ansteuerbares Einstellmittel zur Einstellung der Position zumindest eines verstellbaren optischen Elements im Strahlengang des Laserstrahls. Bei einer solchen Lasermaschine kann erfasst werden, welche Verstellung der Positionen eines optischen Elements oder des Bearbeitungskopfs oder eines Teils des Bearbeitungskopfs zu welcher Verstellung der lateralen Lage des Fokuspunkts in der Fokusebene oder bezüglich eines Bezugspunkts führt. Diese Zuordnung kann erfasst und gespeichert werden und anhand der gespeicherten Zuordnung kann die laterale Lage des Fokuspunkts auf eine vorgegebene gewünschte Lage innerhalb der Fokusebene oder bezüglich eines Bezugspunkts eingestellt werden. Dadurch ist es möglich, eine Lasermaschine kostengünstiger herzustellen, da sie mit weniger strengen Toleranzen, beispielsweise in der Lagerung und Führung der optischen Elemente, gefertigt werden kann. Toleranzen können durch das Einstellmittel reproduzierbar ausgeglichen werden. Die Einstellung des Fokuspunkts auf die vorgegebene Lage kann dabei durch aktorische Verstellung eines weiteren optischen Elements erfolgen, für das keine Zuordnung der Positionsänderung zu einer Fokuslagenänderung gespeichert wurde.

Dadurch, dass das Einstellmittel durch eine Steuerung ansteuerbar ist, kann die Einstellung maschinell erfolgen, so dass keine manuelle Einstellung durch einen Bediener mehr erforderlich ist.

Außerdem ist es möglich, durch eine ansteuerbare Einstellung der Position der optischen Elemente eine Korrektur der Lage des Fokuspunkts während eines Bearbeitungsprozesses vorzunehmen, was nicht möglich ist, wenn lediglich eine manuelle Verstellung vorgesehen ist.

Die Steuerung kann außerdem einen ersten Regler aufweisen, über den die Lage des Fokuspunkts in der Fokusebene oder bezüglich eines Bezugspunkts eingestellt wird. Dazu kann dem Regler eine Regelabweichung aus der zur Einstellung einer bestimmten lateralen Lage des Laserfokus innerhalb der Fokusebene oder bezüglich eines Bezugspunkts gewählten Zuordnung von Positionen optischer Elemente zu Positionen bzw. Lagen des Fokuspunkts in der Fokusebene oder bezüglich eines Bezugspunkts und durch eine Messeinrichtung erfasster tatsächlicher Fokuslage in der Fokusebene oder bezüglich eines Bezugspunkts zugeführt werden. Somit kann, nachdem die Lage des Fokuspunkts zunächst eingestellt wurde, diese Lage nachgeführt werden, insbesondere, wenn sich Änderungen der Lage aufgrund von thermischen Einflüssen ergeben.

Es kann eine zweite Messeinrichtung zur Erfassung der lateralen Lage und/oder Form einer Laserdüse sowie zur Bestimmung der Düsenmitte vorgesehen sein und die Steuerung kann einen zweiten Regler aufweisen zur Regelung der Lage des Fokuspunkts bezüglich der Laserdüse. So können Positionsänderungen aufgrund von Veränderungen der Laserdüse (z.B. in Lage und/oder Form) berücksichtigt werden.

Der erste und der zweite Regler können kaskadiert sein. Dies bedeutet, dass die Ausgangsgröße des zweiten Reglers die Führungsgröße des ersten Reglers beeinflussen kann.

Vorteilhafte Weiterbildungen sind in den Figuren und den Patentansprüchen dargelegt. Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Es zeigen:
- Fig. 1: eine schematische Ansicht einer Lasermaschine;
- Fig. 2: eine alternative Ausführungsform einer Lasermaschine;
- Fig. 3: ein Diagramm zur Erläuterung des erfindungsgemäßen Verfahrens.

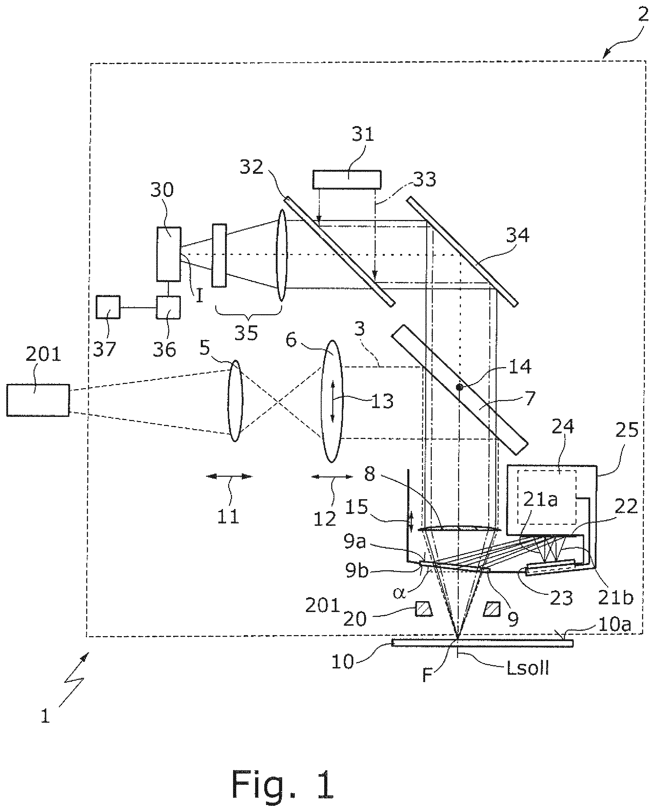

Die Figur 1 zeigt eine Lasermaschine 1 mit einem Laserbearbeitungskopf 2. Im Strahlengang eines Laserstrahls 3, der über eine Lichtleitfaser 201 zum Laserbearbeitungskopf 2 geführt wird, sind mehrere optische Elemente 5, 6, 7, 8, 9 angeordnet. Die optischen Elemente 5 bis 8 dienen der Strahlformung und Ausrichtung des Laserstrahls 3 auf ein Werkstück 10, das optische Element 9 stellt ein Schutzglas zum Schutz der übrigen optischen Elemente vor Verschmutzung dar. Der Laserstrahl 5 wird auf der Oberfläche 10a des Werkstücks 10 fokussiert, so dass die Werkstückoberfläche 10a im vorliegenden Ausführungsbeispiel eine Fokusebene darstellt, in der der Fokuspunkt F liegt.

Die Lage des Fokuspunkts F in der Fokusebene, d.h. auf der Werkstückoberfläche 10a, hängt unter anderem von der Positionierung eines oder mehrerer der optischen Elemente 5, 6 und 8 in Richtung der Doppelpfeile 11, 12 und 15 ab. Erfindungsgemäß ist vorgesehen, dass zumindest eines der optischen Elemente 5 bis 8 über ein Einstellmittel, insbesondere einen Antrieb, aktorisch verstellbar ist, um dadurch eine Lageänderung des Fokuspunkts F auf der Werkstückoberfläche 10a, d.h. in der Fokusebene, zu bewirken, ohne dass sich dabei die Lage des Fokuspunkts F senkrecht zur Fokusebene ändert. Beispielsweise kann das optische Element 6 in Doppelpfeilrichtung 13 senkrecht zur Strahlausbreitungsrichtung motorisch verstellbar oder das optische Element 7 um die Achse 14 motorisch schwenkbar sein.

Vor Beginn eines Laserbearbeitungsprozesses wird im gezeigten Beispiel die Position eines oder mehrerer der optischen Elemente 5, 6 oder 8 in Ausbreitungsrichtung des Laserstrahls 3 verändert (Doppelpfeile 11, 12 und 15), und die Auswirkung auf die (laterale) Lage des Fokuspunktes F in der Fokusebene wird erfasst. Diese Zuordnung der Positionsänderung eines oder mehrerer der optischen Elemente 5, 6 oder 8 auf die laterale Lage des Fokuspunkts F wird gespeichert. Anschließend kann - bereits zu Beginn und während des Laserbearbeitungsprozesses - in Kenntnis dieser Zuordnung die Lage des Fokuspunkts F in der Fokusebene mittels des optischen Elements 6 oder 7 gesteuert auf eine vorgegebene Position Lₛₒₗₗ eingestellt werden. Beispielsweise kann der Fokuspunkt F mittig in einer Laserdüse 20 positioniert werden. Während des Laserbearbeitungsprozesses kann die Position des Fokuspunkts F in der Laserdüse 20 außerdem zusätzlich überwacht und auf die vorgegebene Position Lₛₒₗₗ geregelt werden. Das optische Element 7 kann dabei bei der Erfassung und Speicherung der Auswirkung einer Positionsänderung eines oder mehrerer optischer Elemente auf die laterale Lage des Fokuspunkts unberücksichtigt bleiben. Es ist auch denkbar, dass eine Auswirkung einer Positionsänderung des optischen Elements 7 auf die Fokuslage erfasst und gespeichert wird. Weiterhin ist es denkbar, dass zusätzlich zu den optischen Elementen 6 und 7 weitere oder alternative optische Elemente 5, 8 verstellt werden, um die Fokuslage auf die vorgegebene Fokuslage einzustellen. Beispielsweise könnte auch nur eines der optischen Elemente 5 - 8 zur Einstellung der Fokuslage auf die vorgegebene Fokuslage verstellt werden.

Zur Erfassung der Lage des Fokuspunkts F sind mehrere Möglichkeiten denkbar. Das optische Element 9 kann in Form eines Schutzglases (dünne Planplatte) ausgebildet sein, das bezüglich der Fokusebene unter einem Kippwinkel α angeordnet ist. Das optische Element 9 dient dem Schutz der im Inneren des Laserbearbeitungskopfs 2 angeordneten optischen Komponenten vor Verschmutzungen, z.B. vor Schmauch oder Spritzern, die bei der Bearbeitung des Werkstücks 10 mittels eines Laserstrahls 3 entstehen können. Im Strahlengang vor dem optischen Element 9 ist das als Fokussierlinse ausgebildete optische Element 8 angeordnet, welches der Fokussierung des Laserstrahls 3 auf das Werkstück 10, genauer gesagt auf dessen Oberfläche 10a dient. Der Abstand des optischen Elements 8 von der Oberfläche 10a des Werkstücks 10 entspricht hierbei der Brennweite f des optischen Elements 8. Sowohl an der dem optischen Element 8 zugewandten Oberseite 9a als auch an der dem optischen Element abgewandten Unterseite 9b des optischen Elements 9 wird trotz einer an den jeweiligen Seiten 9a, 9b aufgebrachten (nicht gezeigten) Antireflexbeschichtung ein geringer Anteil der Laserstrahlung reflektiert. Diese an dem optischen Element 9 zurück reflektierte Laserstrahlung 21a, 21b wird über einen Faltungsspiegel 22 umgelenkt und trifft auf einen ortsauflösenden Detektor 23, welcher ebenfalls unter dem Kippwinkel α zur Fokusebene geneigt ist (aber gegenläufig zum optischen Element 9).

Der Kippwinkel α wird in Abhängigkeit von der Brennweite f sowie vom Abstand des optischen Elements 9 von dem optischen Element 8 so groß gewählt, dass die zurückreflektierte Laserstrahlung 21a, 21b aus dem Strahlengang des Laserstrahls 3 ausgekoppelt wird, d.h. nicht auf das optische Element 8 trifft, sondern von einem benachbart dem Laserstrahl 3 angeordneten Detektor 23 erfasst werden kann. Typische Werte für den Kippwinkel α liegen zwischen 5° und 25°.

Anhand der Größe bzw. des Durchmessers der Laserstrahlung 21a, 21b auf dem Detektor 23 kann die Fokusposition des Laserstrahls 3 senkrecht zur Fokusebene bestimmt werden, da die Größe des Auftreffbereichs von der Fokusposition abhängig ist. Außerdem kann die Lage des Laserfokus F in der Fokusebene aus der Auftreffposition der Laserstrahlung 21a, 21b auf dem Detektor 23 bestimmt werden. Die von unterschiedlichen Seiten 9a, 9b des optischen Elements 9 zurückreflektierte Laserstrahlung 21a, 21b trifft in unterschiedlichen Orten bzw. in unterschiedlichen Auftreffbereichen auf dem Detektor 23 auf, so dass es möglich ist, mit Hilfe einer Bildauswerteeinrichtung 24, die Bestandteil eines Fokussensors 25 ist, und die mit dem Detektor 23 gekoppelt ist, die detektierte Laserstrahlung 21a, 21b der jeweiligen Seite 9a, 9b des optischen Elements 9 zuzuordnen.

Für weitere Details der Funktionsweise des Fokussensors 25 wird auf die DE 10 2011 007 176 A1 verwiesen.

Alternativ oder zusätzlich kann eine Kamera 30 vorgesehen sein, die im vorliegenden Beispiel im Auflichtverfahren betrieben wird, d.h. es ist eine zusätzliche Beleuchtungsquelle 31 oberhalb des Werkstücks 10 vorgesehen, welche über einen teildurchlässigen Spiegel 32 Beleuchtungsstrahlung 33 koaxial zur Laserstrahlachse in den Strahlengang einkoppelt. Die zusätzliche Beleuchtungsquelle 31 kann beispielsweise auch außerhalb des Laserbearbeitungskopfs 2 angeordnet und auf das Werkstück 10 gerichtet sein. Alternativ kann die Beleuchtungsquelle 31 innerhalb des Laserkopfs 2 angeordnet sein, jedoch nicht koaxial zum Laserstrahl auf das Werkstück 10 gerichtet sein.

Die Beleuchtungsstrahlung 33 wird über einen Umlenkspiegel 34 auf das Werkstück 10 gerichtet. Vom Werkstück 10 reflektierte Strahlung wird ebenfalls über den Umlenkspiegel 34 umgelenkt und nach einer Fokussierung durch eine Fokussiereinrichtung 35 auf die Kamera 30 gelenkt.

Die Kamera 30 kann somit ein hochaufgelöstes Bild eines Ausschnitts der Werkstückoberfläche 10a aufnehmen. Das Bild wird durch die kreisförmige Innenkontur der Laserdüse 20 begrenzt. Eine Auswerteeinrichtung 36 dient zur Auswertung des aufgenommenen Bildes und insbesondere zur Detektion der Position bzw. Lage des Fokuspunkts F auf dem Werkstück 10. Die Auswerteeinrichtung 36 kann ebenso wie der Fokussensor 25 mit einer Steuereinrichtung 37 in Verbindung stehen, die zur Steuerung und/oder Regelung der Position des Fokuspunkts F in der Fokusebene und/oder bezüglich der Mitte der Laserdüse 20 dient und die Verstellung der optischen Elemente 6 bzw. 7 bewirkt.

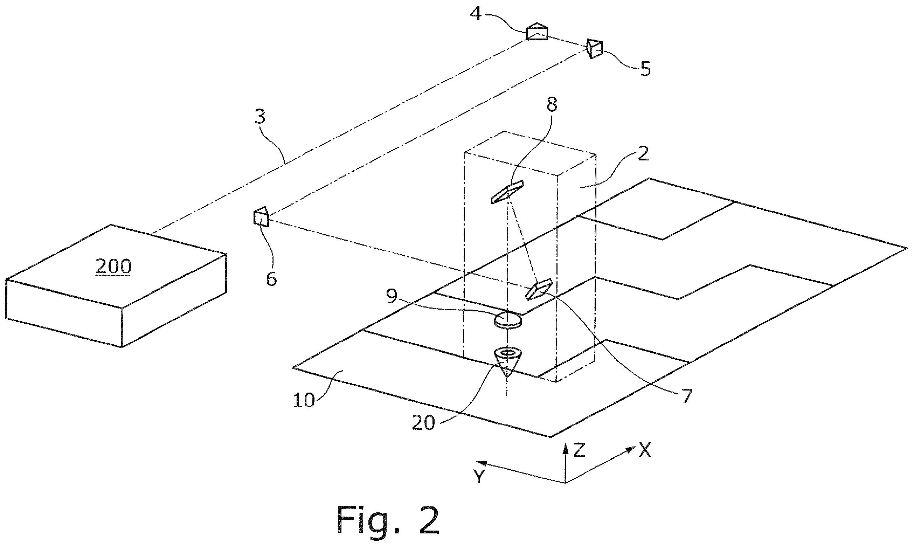

Figur 2 zeigt eine alternative Variante einer Laserbearbeitungsmaschine 1, wobei sich entsprechende Bauteile mit denselben Bezugsziffern wie in Fig. 1 bezeichnet sind, mit einer Freistrahlführung des von einem Laser 200 erzeugten Laserstrahls 3. Der Laserstrahl 3 wird über verschiedene optische Elemente 4 - 9 zur Laserdüse 20 geführt, während der Laserbearbeitungskopf 20 im Arbeitsraum in x-, y- und z-Richtung bewegt wird, wobei zumindest eines der optischen Elemente 4 - 9 aktorisch verstellbar ist, vorzugsweise zumindest die optischen Elemente 7 und 8 aktorisch verstellbar sind. Durch Fertigungstoleranzen beispielsweise in der Führung des Laserbearbeitungskopfs 20 oder der Lagerung der optischen Elemente 4 - 9 können bei unterschiedlicher Positionierung des Laserbearbeitungskopfs 20 Positionsänderungen bzw. Verkippungen der optischen Elemente 4 - 9 auftreten, die zu einer lateralen Lageänderung des Laserfokuspunkts führen. Diese laterale Lageänderung ist reproduzierbar und kann wie in den vorstehenden Absätzen beschrieben kompensiert werden, beispielsweise durch eine gesteuerte Verkippung des optischen Elements (Spiegels) 8.

In einer weiteren Ausgestaltung (ohne Bild) kann der Bearbeitungskopf der Lasermaschine mehrteilig ausgeführt sein, so dass beispielsweise zur Änderung des Strahldurchmessers nicht optische Elemente verschoben werden, sondern die Lage der Düse in Strahlausbreitungsrichtung geändert wird, indem der untere Teil des Bearbeitungskopfs relativ zum oberen Teil verschoben wird. Wenn die Achse dieser Düsenführung nicht parallel zur Strahlausbreitungsrichtung ist, ergibt sich ein reproduzierbarer Versatz zwischen Strahlmittelpunkt und Düsenmittelpunkt, der wie oben beschrieben gesteuert kompensiert werden kann.

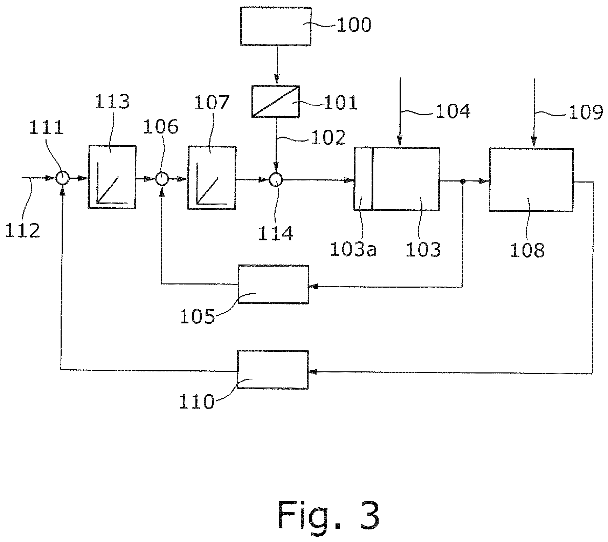

Die schematische Darstellung der Figur 3 dient der Erläuterung des erfindungsgemäßen Verfahrens. Zunächst wird an der Position 100 vor dem Laserbearbeitungsprozess, z.B. bei der Inbetriebnahme der Lasermaschine, die Stellung bzw. Position eines oder mehrerer der optischen Elemente 5, 6 oder 8 in Strahlausbreitungsrichtung im Laserbearbeitungskopf gemäß Figur 1 oder die Position des Bearbeitungskopfs 20 in der Maschine gemäß Figur 2 (und damit mittelbar die Position der optischen Elemente 4-9) variiert und der Einfluss einer solchen Positionsänderung auf die Lage des Fokuspunkts F in der Fokusebene erfasst. Die Erfassung kann mit einer ersten oder zweiten Messeinrichtung 105, 110 erfolgen. Diese Zuordnung von Positionsänderungen eines oder mehrerer der optischen Elemente 4 bis 9 und/oder des Laserbearbeitungskopfs 20 auf die Lage des Fokuspunkts F wird gespeichert, siehe Position 101. Beispielsweise kann die Zuordnung in einer Tabelle abgelegt werden. Eine Solllage, d.h. die vorgegebene Lage Lₛₒₗₗ des Fokuspunkts, und die dafür benötigte Einstellung eines oder mehrerer der optischen Elemente 4 bis 9 werden vorgegeben, siehe Pfeil 102. Anhand dieser Werte wird die laterale Lage des Fokuspunkts F eingestellt, indem beispielsweise Einstellmittel zumindest eines optischen Elements 6 oder 7 gemäß Figur 1 (oder z.B. 6, 7 oder 8 gemäß Fig. 2) angesteuert werden. Die Einstellmittel können außerdem Stellglieder 103a einer Regelstrecke 103 darstellen. Da auf diese Einstellung Störgrößen 104, beispielsweise Temperaturänderungen, einwirken können, wird die laterale Lage des Fokuspunkts F während des Laserbearbeitungsprozesses mit der ersten Messeinrichtung 105 erfasst und auf ein Additionsglied 106 gegeben, dessen Ausgang auf einen ersten Regler 107 geht.

Die laterale Lage des Fokuspunkts F kann insbesondere so eingestellt werden, dass dieser mittig bezüglich der Laserdüse 20 liegt, was durch den Block 108 angedeutet ist. Die Position der Düsenmitte kann sich aufgrund von Störgrößen 109, z.B. Änderung der Position und/oder Form der Laserdüse 20, ändern. Solche Änderungen können durch den Tausch der Laserdüse 20 oder durch Beschädigung bzw. Verschmutzung der Düse im Laserbearbeitungsprozess bedingt sein. Daher wird im gezeigten Beispiel durch eine zweite Messeinrichtung 110 die Lage des Mittelpunkts der Laserdüse 20 sowie die Lage des Fokuspunkts F bezüglich der Düsenmitte erfasst. Das Messergebnis wird auf ein Additionsglied 111 gegeben, dem außerdem ein Sollwert 112 für die laterale Lage des Fokuspunkts F bezüglich der Laserdüse 20 bzw. der Laserdüsenmitte vorgegeben wird. Die Regelabweichung wird einem zweiten Regler 113 zugeführt, dessen Ausgang ebenfalls auf das Additionsglied 106 geht. Die Regler 107, 113 sind somit kaskadiert.

Die Stellgröße(n) des Reglers 107 wird/werden im Additionsglied 114 zu den gemäß Pfeil 102 vorgegebenen Position(en) der optischen Elemente 4 bis 9 addiert.

Zumindest die Regler 107, 113 könnten Bestandteil der Steuerung 37 sein. Sowohl der Fokussensor 25 als auch die Anordnung mit den Komponenten 30 - 36 können eine erste und/oder zweite Messeinrichtung 105, 110 sein. Die Elemente 106, 107, 114, 103a, 103, 105 können einen inneren Regelkreis bilden.

## Patentansprüche

1. Verfahren zur Lasermaterialbearbeitung, **dadurch gekennzeichnet, dass**:
vor dem Laserbearbeitungsprozess in einem Verfahrensschritt der Einfluss einer Positionsänderung zumindest eines optischen Elements (4-9) in einer Strahlführung des Laserstrahls (3) und/oder des Laserbearbeitungskopfs (2) in einem Arbeitsraum einer Lasermaschine (1) und/oder eines bewegbaren Teils des Bearbeitungskopfs (2) auf die laterale Lage des Fokuspunkts (F) des Laserstrahls (3) in der Fokusebene oder relativ zu einem Bezugspunkt am Laserbearbeitungskopf erfasst wird und anschließend in einem weiteren Verfahrensschritt vor und/oder während des Laserbearbeitungsprozesses der Fokuspunkt (F) anhand der zuvor erfassten Positionsänderung auf eine vorgegebene laterale Lage (Lₛₒₗₗ) in der Fokusebene oder relativ zu dem Bezugspunkt durch eine Positionseinstellung zumindest eines optischen Elements (4-9) in der Strahlführung eingestellt wird, wobei zumindest ein zu einer lateralen Lageänderung des Fokuspunkts (F) führender Parameter erfasst und eine Zuordnung des zumindest einen Parameters zu einer Lage des Fokuspunkts in der Fokusebene oder relativ zum Bezugspunkt gespeichert wird.

2. Verfahren nach Anspruch 1, **dadurch gekennzeichnet, dass** der Bezugspunkt am Laserbearbeitungskopf ein Düsenmittelpunkt ist.

3. Verfahren nach einem der vorhergehenden Ansprüche, **dadurch gekennzeichnet, dass** das zumindest eine optische Element (6, 7) in der Strahlführung aktorisch verstellt wird.

4. Verfahren nach Anspruch 3, **dadurch gekennzeichnet, dass** das zumindest eine optische Element (6, 7) im Bearbeitungskopf (2) aktorisch verstellt wird.

5. Verfahren nach einem der vorhergehenden Ansprüche, **dadurch gekennzeichnet, dass** die vorgegebene Lage (Lₛₒₗₗ) dem Mittelpunkt einer Laserdüse (20) des Laserbearbeitungskopfs (2) entspricht oder einen gezielten Versatz zum Mittelpunkt der Laserdüse (20) aufweist und der Fokuspunkt (F) während des Laserbearbeitungsprozesses mittig oder gezielt außermittig in der Laserdüse (20) positioniert wird.

6. Verfahren nach einem der vorhergehenden Ansprüche, **dadurch gekennzeichnet, dass** während eines Laserbearbeitungsprozesses die laterale Position des Laserfokuspunkts (F) erfasst wird und der Laserfokuspunkt (F) auf die vorgegebene Lage (Lₛₒₗₗ) geregelt wird.

7. Verfahren nach einem der vorhergehenden Ansprüche, **dadurch gekennzeichnet, dass** vor und/oder während dem Laserbearbeitungsprozess die Lage und/oder Form der Laserdüse (20) erfasst und der Mittelpunkt der Laserdüse (20) oder ein gezielter Versatz zum Mittelpunkt der Laserdüse (20) als vorgegebene Lage (Lₛₒₗₗ) festgelegt wird.

8. Lasermaschine (1) mit einem Laserbearbeitungskopf (2) und einer Laserdüse (20) sowie einer ersten Messeinrichtung (105) zur Erfassung der Lage eines Fokuspunkts (F) in der Fokusebene oder relativ zu einem Bezugspunkt am Laserbearbeitungskopf (2),
die Lasermaschine **gekennzeichnet durch**:
einen Speicher, der eingerichtet ist zur Speicherung der Zuordnung der Position zumindest eines verstellbaren optischen Elements (4-9) in der Strahlführung des Laserstrahls (3) und/oder der Position des Laserbearbeitungskopfs (2) im Arbeitsraum der Lasermaschine (1) und/oder der Position eines verstellbaren Teils des Laserbearbeitungskopfs (2) zu einer Lage des Fokuspunkts (F) in der Fokusebene bzw. relativ zum Bezugspunkt am Laserbearbeitungskopf (2),
eine Steuerung (37) ansteuerbares Einstellmittel zur Einstellung der Position zumindest eines optischen Elements (4-9) im Strahlengang des Laserstrahls,
wobei die Lasermaschine (1) unter Verwendung der Steuerung (37) und den Speicher (36) eingerichtet ist, das Verfahren gemäß einem der vorhergehenden Patentansprüche durchzuführen.

9. Lasermaschine nach Anspruch 8, **dadurch gekennzeichnet, dass** die Steuerung einen ersten Regler (107) aufweist, über den die Lage des Fokuspunkts (F) in der Fokusebene geregelt wird.

10. Lasermaschine nach einem der vorhergehenden Ansprüche 8 oder 9, **dadurch gekennzeichnet, dass** eine zweite Messeinrichtung (110) zur Erfassung der lateralen Lage und/oder Form der Laserdüse (20) vorgesehen ist und die Steuerung (37) einen zweiten Regler (113) aufweist zur Regelung der Lage des Fokuspunkts (F) bezüglich der Laserdüse (20).

11. Lasermaschine nach dem Anspruch 10, **dadurch gekennzeichnet, dass** der erste und der zweite Regler (107, 113) kaskadiert sind.

## Claims

1. A method for material processing by laser, **characterized in that**: prior to the laser machining process, in one method step, the effect of a positional change of at least one optical element (4-9) in a beam guide of the laser beam (3), and/or of the laser machining head (2) in a working chamber of a laser machine (1), and/or of a movable part of the machining head (2), on the lateral location of the focal point (F) of the laser beam (3) in the focal plane, or relative to a reference point on the laser machining head, is detected, and then, in a further method step prior to and/or during the laser machining process, the focal point (F) is adjusted, with the aid of the previously detected positional change, to a predefined lateral location (L_{target}) in the focal plane or relative to the reference point, by making a positional adjustment of at least one optical element (4-9) in the beam guide, wherein at least one parameter is detected which leads to a lateral location change of the focal point (F), and an assignment of the at least one parameter to a location of the focal point in the focal plane or relative to the reference point is stored.

2. The method according to claim 1, **characterized in that** the reference point on the laser machining head is a nozzle center point.

3. The method according to any one of the preceding claims, **characterized in that** the at least one optical element (6, 7) is displaced in the beam guide by an actuator.

4. The method according to claim 3, **characterized in that** the at least one optical element (6, 7) in the machining head (2) is displaced by an actuator.

5. The method according to any one of the preceding claims, **characterized in that** the predefined location (L_{target}) corresponds to the center point of a laser nozzle (20) of the laser machining head (2) or is shifted in a targeted fashion relative to the center point of the laser nozzle (20), and that the focal point (F) is positioned in the laser nozzle (20) centrally or off-center in a targeted fashion during the laser machining process.

6. The method according to any one of the preceding claims, **characterized in that**, during a laser machining process, the lateral position of the laser focal point (F) is detected and the laser focal point (F) is regulated to the predefined location (L_{target}).

7. The method according to any one of the preceding claims, **characterized in that**, prior to and/or during the laser machining process, the location and/or shape of the laser nozzle (20) is detected, and the center point of the laser nozzle (20) or a targeted shift relative to the center point of the laser nozzle (20) is established as the predefined location (L_{target}).

8. A laser machine (1) with a laser machining head (2) and a laser nozzle (20), as well as a first measuring device (105) for detecting the location of a focal point (F) in the focal plane or relative to a reference point on the laser machining head (2), the laser machine being **characterized by**:
a memory unit configured to store the assignment of the position of at least one displaceable optical element (4-9) in the beam guide of the laser beam (3) and/or to store the position of the laser machining head (2) in the working chamber of the laser machine (1) and/or to store the position of a displaceable part of the laser machining head (2) with respect to a location of the focal point (F) in the focal plane or relative to the reference point on the laser machining head (2),
a controller (37) of controllable adjusting means for adjusting the position of at least one optical element (4-9) in the beam path of the laser beam,
wherein, using the controller (37) and the memory unit (36), the laser machine (1) is configured to carry out the method according to any one of the preceding patent claims.

9. The laser machine according to claim 8, **characterized in that** the controller has a first regulator (107) via which the location of the focal point (F) in the focal plane is regulated.

10. The laser machine according to any one of the preceding claims 8 or 9, **characterized in that** a second measuring device (110) for detecting the lateral location and/or shape of the laser nozzle (20) is provided and the controller (37) has a second regulator (113) for regulating the location of the focal point (F) relative to the laser nozzle (20).

11. The laser machine according to claim 10, **characterized in that** the first and the second regulator (107, 113) are cascaded.

## Revendications

1. Procédé de traitement de matériaux par laser, **caractérisé en ce que** : avant le processus de traitement laser, lors d'une étape de procédé, l'influence d'un changement de position d'au moins un élément optique (4-9) dans un guidage de faisceau du faisceau laser (3) et/ou de la tête de traitement laser (2) dans l'espace de travail d'une machine laser (1) et/ou d'une partie mobile de la tête de traitement (2) à l'emplacement latéral du point focal (F) du faisceau laser (3) dans le plan focal ou par rapport à un point de référence sur la tête de traitement laser est détectée, puis, lors d'une étape de procédé ultérieure avant et/ou pendant le processus de traitement laser, le point focal (F) est placé dans un emplacement latéral prédéterminé (L_{cible}) dans le plan focal ou par rapport au point de référence, sur la base du changement de position détecté précédemment, par un réglage de position d'au moins un élément optique (4-9) dans le guidage de faisceau, dans lequel au moins un paramètre induisant un changement d'emplacement latéral du point focal (F) est détecté et une association dudit au moins un paramètre à un emplacement du point focal dans le plan focal ou par rapport au point de référence est enregistrée.

2. Procédé selon la revendication 1, **caractérisé en ce que** le point de référence sur la tête de traitement laser est un point central de buse.

3. Procédé selon l'une quelconque des revendications précédentes, **caractérisé en ce que** ledit au moins un élément optique (6, 7) du guidage de faisceau est réglé par un actionneur.

4. Procédé selon la revendication 3, **caractérisé en ce que** ledit au moins un élément optique (6, 7) de la tête de traitement (2) est réglé par un actionneur.

5. Procédé selon l'une quelconque des revendications précédentes, **caractérisé en ce que** l'emplacement prédéterminé (L_{cible}) correspond au point central d'une buse laser (20) de la tête de traitement laser (2) ou présente un décalage spécifique par rapport au point central de la buse laser (20), et **en ce que** le point focal (F) est positionné de manière centrée ou spécifiquement décentrée dans la buse laser (20) pendant le processus de traitement laser.

6. Procédé selon l'une quelconque des revendications précédentes, **caractérisé en ce que**, pendant un processus de traitement laser, la position latérale du point focal (F) du laser est détectée et le point focal (F) du laser est réglé à l'emplacement prédéterminé (L_{cible}).

7. Procédé selon l'une quelconque des revendications précédentes, **caractérisé en ce que** l'emplacement et/ou la forme de la buse laser (20) est détecté avant et/ou pendant le processus de traitement laser, et **en ce que** le point central de la buse laser (20) ou un décalage spécifique par rapport au point central de la buse laser (20) est défini comme étant l'emplacement prédéterminé (L_{cible}).

8. Machine laser (1) comportant une tête de traitement laser (2) et une buse laser (20) ainsi qu'un premier dispositif de mesure (105) pour la détection de l'emplacement d'un point focal (F) dans le plan focal ou par rapport à un point de référence sur la tête de traitement laser (2),
la machine laser étant **caractérisée par** :
une mémoire configurée pour le stockage de l'association de la position d'au moins un élément optique (4-9) réglable dans le guidage de faisceau du faisceau laser (3) et/ou de la position de la tête de traitement laser (2) dans l'espace de travail de la machine laser (1) et/ou de la position d'une partie réglable de la tête de traitement laser (2) à un emplacement du point focal (F) dans le plan focal ou par rapport au point de référence sur la tête de traitement laser (2),
un moyen de réglage contrôlable par un contrôleur (37) pour le réglage de la position d'au moins un élément optique (4-9) dans le trajet de faisceau du faisceau laser,
dans lequel la machine laser (1) est configurée à l'aide du contrôleur (37) et de la mémoire (36) pour mettre en œuvre le procédé selon l'une quelconque des revendications précédentes.

9. Machine laser selon la revendication 8, **caractérisée en ce que** le contrôleur comporte un premier régulateur (107) qui régule l'emplacement du point focal (F) dans le plan focal.

10. Machine laser selon l'une quelconque des revendications précédentes 8 ou 9, **caractérisée en ce qu'**un deuxième dispositif de mesure (110) est pourvu pour la détection de l'emplacement latéral et/ou de la forme de la buse laser (20), et **en ce que** le contrôleur (37) comporte un deuxième régulateur (113) pour la régulation de l'emplacement du point focal (F) par rapport à la buse laser (20).

11. Machine laser selon la revendication 10, **caractérisée en ce que** le premier régulateur et le deuxième régulateur (107, 113) sont agencés en cascade.
